# EUROPEAN PATENT APPLICATION

(11) **EP 4 607 741 A1**
(43) Date of publication of application: **27.08.2025**
(21) Application number: 22962722.9
(22) Date of filing: 19.10.2022
(51) Int. Cl.: H02J 7/00

(54) **ELECTRONIC DEVICE AND PROGRAM**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/038865
(87) International publication number: WO 2024/084610

(57) **Abstract**

An electronic device having a control unit and a first battery, wherein, when a second battery is provided to a cover member attached to a device main body, and a residual power of the second battery is a pre-determined reference value or higher, the control unit switches a supply of power for some electronic components provided to the device main body from the first battery to the second battery.

## Description

### [Technical Field]

The present disclosure relates to an electronic device and a program.

### [Background Art]

Many portable electronic devices run on a battery built into a main body. The battery used may be a primary battery or a secondary battery. An electronic device operating on a primary battery has a lid or other cover member that is removable by a user attached thereto. In addition, an electronic device operating on a secondary battery is provided with a USB terminal or other power supply terminal for charging the secondary battery externally. Recently, some electronic devices can charge the secondary battery wirelessly without providing a power supply terminal.

### [Citation List]

### [Patent Literature]

[PTL 1] JP 2006-280186 A

### [Summary of Invention]

### [Technical Problem]

Modern portable electronic devices consume a lot of power, while long-time usage is also demanded. As countermeasures to these conflicting demands, the capacity of built-in batteries has been increased and power saving for electronic devices has been addressed. However, each approach has limitations.

The present disclosure takes account of this problem and provides technology enabling a more diverse power supply to be realized than when only a battery built into an electronic device is used as electrical power source.

### [Solution to Problem]

One embodiment of the present disclosure provides an electronic device having a control unit and a first battery, wherein, when a second battery is provided to a cover member attached to a device main body, and a residual power of the second battery is a predetermined reference value or higher, the control unit switches a supply of power directed to a portion of electronic components provided to the device main body from the first battery to the second battery.

The control unit may switch, from the first battery to the second battery, a power supply for a portion of the electronic components operated by the same system power source as the control unit.

When a first presentation unit for presenting information is provided to the cover member, the control unit may stop a supply of power to a second presentation unit provided on the device main body.

When a first presentation unit for presenting information is provided to the cover member, the control unit may stop a supply of power to a second presentation unit provided on the device main body when presentation of information by the second presentation unit can no longer be confirmed by a user due to the attachment of the cover member.

In this case, the control unit may switch presentation of information by the second presentation unit to presentation of information by the first presentation unit.

The second battery may be charged by a power supply from the device main body.

Some electronic components may be a heating unit for heating an aerosol source.

The attachment of the cover member to the device main body may be one of conditions to enable heating of the aerosol source by the heating unit.

The cover member may allow operation of a switch on the device main body by pressing by a user in a state in which the cover member is attached to the device main body.

The control unit may receive, from the cover member, information about operation of an operating unit provided to the cover member.

The cover member attached to the device main body may form an integral external appearance with a portion of the device main body that is not covered.

One embodiment of the present disclosure provides a program for causing a computer provided in an electronic device having a first battery to realize a function for, when a second battery is provided to a cover member attached to a device main body, switching a supply of power for some electronic components provided to the device main body from the first battery to the second battery.

### [Advantageous Effects of the Invention]

One embodiment of the present disclosure enables a more diverse power supply to be realized than when only a battery built into an electronic device is used as an electrical power source.

### [Brief Description of Drawings]

[Fig. 1] fig. 1 is a diagram in which a front face side of an aerosol generating device is viewed from diagonally above.
[Fig. 2] fig. 2 is a diagram in which the front face side of the aerosol generating device is viewed from diagonally below.
[Fig. 3] fig. 3 is a diagram in which the aerosol generating device from which a shutter has been removed is viewed from above.
[Fig. 4] fig. 4 is a diagram in which a main body device with a front panel removed is viewed from a front face.
[Fig. 5] fig. 5 is a view of a rear face of the front panel removed from the main body device.
[Fig. 6] is a diagram schematically showing an internal configuration of an aerosol generating device used in embodiment 1.
[Fig. 7] is a diagram schematically showing connection relationships in a power source system circuit in the aerosol generating device used in embodiment 1.
[Fig. 8] fig. 8 is a flowchart illustrating an example of an attachment detection operation implemented by a control unit of the main body device.
[Fig. 9] fig. 9 is a flowchart illustrating processing for switching a system power source by the control unit of embodiment 1.
[Fig. 10] fig. 10 is a diagram in which a front face side of an aerosol generating device used in embodiment 2 is viewed from diagonally above.
[Fig. 11] fig. 11 is a diagram schematically showing an internal configuration of an aerosol generating device used in embodiment 2.
[Fig. 12] fig. 12 is a diagram schematically showing connection relationships in a power source system circuit in the aerosol generating device used in embodiment 2.
[Fig. 13] fig. 13 is a flowchart illustrating processing for switching a power supply by the control unit of embodiment 2.
[Fig. 14] fig. 14 is a diagram in which a front face side of an aerosol generating device used in embodiment 3 is viewed from diagonally above.
[Fig. 15] fig. 15 is a flowchart illustrating processing for switching a power supply by the control unit of embodiment 3.
[Fig. 16] fig. 16 is a diagram schematically showing connection relationships in a power source system circuit in an aerosol generating device used in embodiment 4.
[Fig. 17] fig. 17 is a flowchart illustrating processing for switching a power supply implemented by the control unit of embodiment 4.
[Fig. 18] fig. 18 is a diagram schematically showing an internal configuration of an aerosol generating device used in embodiment 5.
[Fig. 19] fig. 19 is a diagram schematically showing connection relationships in a power source system circuit in an aerosol generating device used in embodiment 5.
[Fig. 20] fig. 20 is a flowchart illustrating an example of a USB charging operation implemented by the control unit of embodiment 5.
[Fig. 21] fig. 21 is a diagram illustrating the USB charging operation.
[Fig. 22] fig. 22 is a diagram schematically showing connection relationships in a power source system circuit in an aerosol generating device used in embodiment 6.

### [Description of Embodiments]

Embodiments relating to the present disclosure will be described below with reference to the drawings. In the drawings, identical parts are indicated by identical reference signs.

### <Terms>

An aerosol generating device according to each embodiment is a form of electronic cigarette.

In the following description, a substance generated by the aerosol generating device will be referred to as an aerosol. An aerosol refers to a mixture of minute liquid or solid particles suspended in a gas, and air or another gas.

The embodiments describe aerosol generating devices which generate the aerosol without associated burning.

In the following description, the action of a user inhaling the aerosol generated by the aerosol generating device will be referred to as "inhalation" or "a puff".

The embodiments describe aerosol generating devices to which a solid aerosol source can be fitted. It should be noted that a container for accommodating the solid aerosol source will be referred to as both a "capsule" and a "stick-type substrate", depending on the form of product. Capsules and stick-type substrates are consumables. Capsules and stick-type substrates therefore have fixed criteria for replacement.

### <Embodiment 1>

### <Example of External Appearance>

An example of the external appearance of an aerosol generating device 1 used in embodiment 1 will be described first of all.

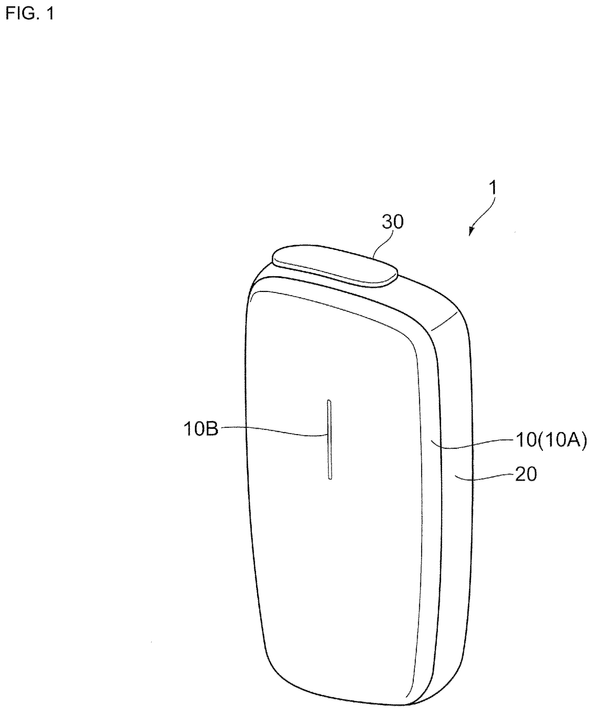

Fig. 1 is a diagram in which a front face side of the aerosol generating device 1 is viewed from diagonally above.

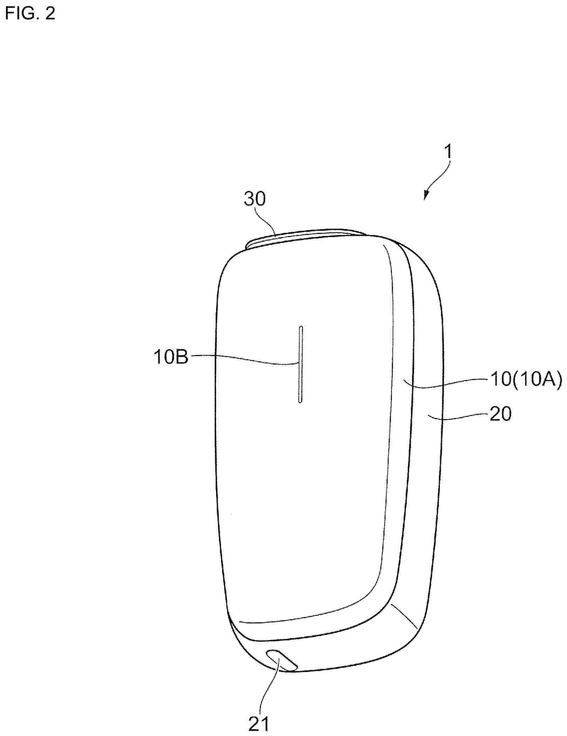

Fig. 2 is a diagram in which the front face side of the aerosol generating device 1 is viewed from diagonally below.

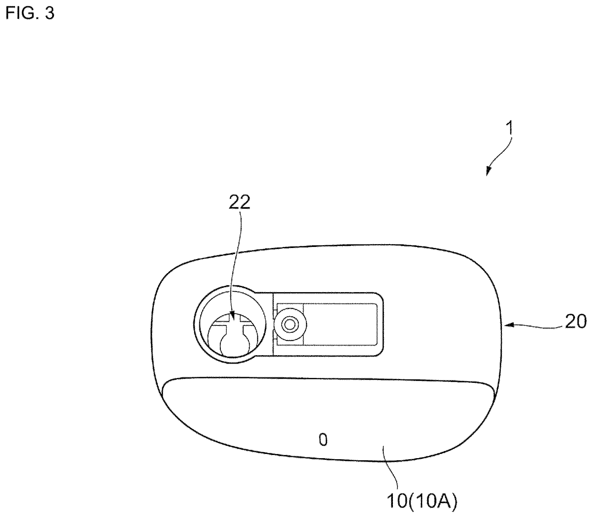

Fig. 3 is a diagram in which the aerosol generating device 1 from which a shutter 30 has been removed is viewed from above.

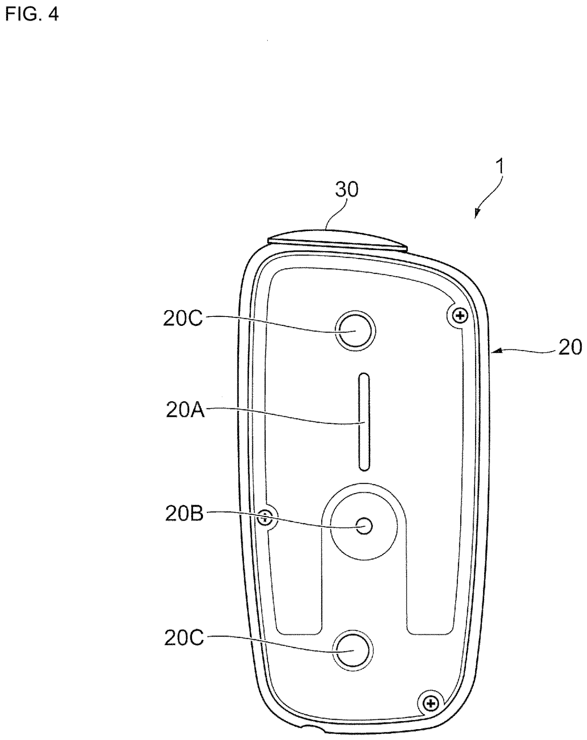

Fig. 4 is a diagram in which a main body device 20 with a front panel 10 removed is viewed from a front face.

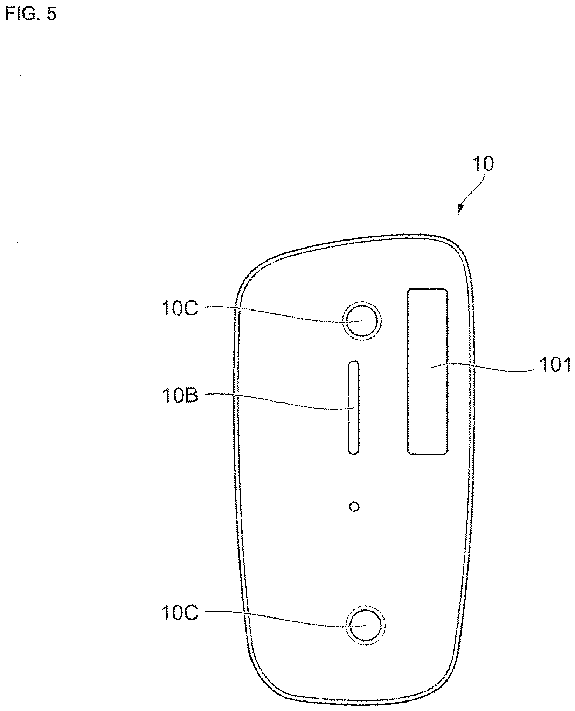

Fig. 5 is a view of a rear face of the front panel 10 removed from the main body device 20.

The aerosol generation device 1 used in the present embodiment has a size that can be held by a user in a single hand.

The aerosol generating device 1 comprises: a main body device 20; a front panel 10 attached to a front face of the main body device 20; and a shutter 30 which is disposed on an upper face of the main body device 20 and can be slidably operated along the upper face. The main body device 20 here is an example of an apparatus main body.

The front panel 10 is a member which is detachable from the main body device 20. The front panel 10 referred to here is an example of a cover member. It should be noted that the front panel 10 is attached/detached by a user.

The front panel 10 attached to the main body device 20 covers a front face part of the main body device 20, as shown in fig. 1 and 2. In other words, even after the attachment of the front panel 10, all but the front portion of the main body device 20 can be observed from the outside. Side faces, a back face, an upper face, and a bottom face of the main body device 20 can also be seen from the outside after the front panel 10 has been attached, for example.

The front panel 10 attached to the main body device 20 joins continuously and steplessly with the side faces, upper face, and bottom face of the main body device 20, as shown in fig. 1 and 2, forming an integral external appearance.

One role of the front panel 10 is thus decorative. Moreover, the side faces, upper face and bottom face of the main body device 20 are examples of parts which are not covered by the front panel 10.

The front panel 10 is provided with a window 10B. The window 10B is provided at a position facing a light-emitting element on the main body device 20 side. An LED (= light-emitting diode) 20A (see fig. 4) is used as the light-emitting element in embodiment 1.

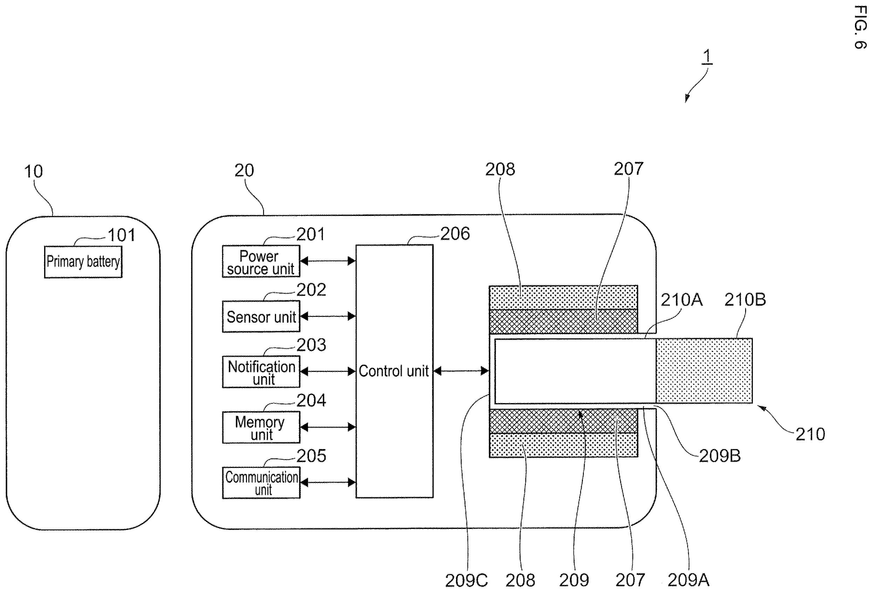

The window 10B in embodiment 1 is composed of a material that transmits light. The window 10B may equally be a slit penetrating from a front surface to a rear surface. Moreover, illumination and flashing of the light-emitting element represent states of operation, etc. of the aerosol generating device 1. The state of operation also includes errors. Illumination and flashing of the light-emitting element are controlled by a control unit 206 (see fig. 6) which will be described later.

In addition to its decorative role, the front panel 10 also has the role of alleviating propagation of heat released from the main body device 20, etc. In this embodiment, aerosol generation is therefore permitted only when the front panel 10 is attached to the main body device 20. In other words, the front panel 10 attached to the main body device 20 forms an integral external appearance with the main body device 20 in a state in which an aerosol can be generated.

Furthermore, the front panel 10 has a role of protecting the main body device 20 from soiling and scratches, etc.

In addition, the front panel 10 deforms as a result of a user pressing a location thereon below the window 10B with the fingertips, and the front panel 10 is restored to its original shape when pressing is stopped.

A primary battery 101 is fitted to an inner side of the front panel 10 used in this embodiment. When the front panel 10 fitted with the primary battery 101 is attached to the main body device 20, an amount of power which can be used by the aerosol generating device 1 as a whole can be increased as compared to when the front panel 10 not fitted with the primary battery 101 is attached to the main body device 20. The primary battery 101 fitted to the front panel 10 is an example of a second battery. It should be noted that the battery fitted to the front panel 10 will be referred to below as a "sub-battery".

The primary battery 101 fitted to the front panel 10 is used as an auxiliary power source for supplementing a lack of power in the main body device 20. The primary battery 101 is detachable from a rear face of the front panel 10. In other words, if the primary battery 101 has no residual capacity or reduced residual capacity, it can be replaced with a new primary battery 101.

The front panel 10 of this embodiment is an example of a cover member. Moreover, a main body panel 10A forming the external appearance of the front panel 10 shown in fig. 1 and 2 is an example of a main body portion.

Film-type, coin-type and chip-type batteries, for example, are feasible as the primary battery 101. The primary battery 101 needs to be thin in all cases so as not to impede attachment of the front panel 10 to the main body device 20. Moreover, the front panel 10 to which the primary battery 101 is fitted is also provided with electrodes and connectors (not depicted) which are used to supply power to the main body device 20. Power supply electrodes may power the main body device 20 by contact power supply, but a loop coil (not depicted) is added as an electronic component in the case of contactless power supply (i.e., wireless power supply).

Standards for the contactless power supply referred to here include standards based on electromagnetic induction systems, such as the Qi standard and the NFC (= near field communication) standard, and electric field induction systems.

A type C USB (= universal serial bus) connector 21 is provided on the bottom face side of the main body device 20. The shape and type of USB connector 21 are given by way of example. In other words, the USB connector 21 may be a USB other than type C. In embodiment 1, the USB connector 21 is used for charging a power source unit 201 (see fig. 6) built into the main body device 20, for example.

A hole 22 for insertion of a stick-type substrate 210 (see fig. 6) accommodating an aerosol source is provided in an upper face portion of the main body device 20.

The stick-type substrate 210 used in this embodiment accommodates a solid aerosol source in a paper tube molded substantially into a cylindrical shape. The hole 22 is exposed by sliding the shutter 30 to an open position, and hidden by sliding the shutter 30 to a closed position.

The hole 22 has a cylindrical shape virtually the same as that of the stick-type substrate 210 in the case of embodiment 1. The diameter of an opening part of the hole 22 constitutes the dimension of a stick-type substrate 210 which can be inserted. In other words, the diameter of the stick-type substrate 210 is the dimension which can be inserted into the hole 22.

A magnet, for example, is attached to a rear face of the shutter 30. Meanwhile, a Hall IC is attached to the main body device 20 in a movable range of the shutter 30.

The Hall IC is a magnetic sensor formed by a Hall element and an operational amplifier, etc., and outputs a voltage commensurate with the intensity of the magnetic field passing across the Hall element.

In this embodiment, opening and closing of the shutter 30 is detected from a change in the voltage output from the Hall IC accompanying sliding of the shutter 30. That is to say, it is detected whether the shutter 30 is at the closed position or the open position.

A button 20B is disposed substantially in the center of the front face of the main body device 20. As indicated above, the button 20B is operable while the front panel 10 is in an attached state.

The button 20B is used, for example, for turning the power source of the main body device on and off, for turning the power supply to a heating unit 207 (see fig. 6) for heating the aerosol source on and off, and for Bluetooth (registered trademark) pairing commands, etc.

Moreover, a reset function is performed by a long press (e.g., pressing for 5 seconds or more) of the button 20B while the front panel 10 is removed from the main body device 20.

BLE (= Bluetooth low energy) is used as Bluetooth in this embodiment.

Magnets 20C used for attaching the front panel 10 are disposed on the upper portion and lower portion of the front face of the main body device 20. The magnets 20C are provided at positions facing magnets 10C provided on the inner side of the front panel 10. The magnets 10C on the front panel 10 are N poles, and the magnets 20C on the main body device 20 side are S poles, for example. The front panel 10 is detachably attached to the main body device 20 by the force of attraction of the magnets.

It should be noted that either the magnets 10C or the magnets 20C may be metal pieces made of iron or another magnetic metal. Incidentally, attachment of the front panel 10 to the main body device 20 is detected by means of the Hall IC provided on the main body device 20 side.

Various other types of electronic components required for generating an aerosol are built into the main body device 20. In this sense, the main body device 20 is an example of an electronic device specifically for generating an aerosol. Moreover, in a narrow sense the main body device 20 is referred to as an aerosol generating device.

### <Internal Configuration>

### <Configuration of Functional Unit>

Fig. 6 is a diagram schematically showing an internal configuration of the aerosol generating device 1 used in embodiment 1. It should be noted that fig. 6 shows a state in which the stick-type substrate 210 is fitted to the main body device 20. The user inhales the aerosol while the stick-type substrate 210 is held in the holding portion 209.

Furthermore, the internal configuration shown in fig. 6 is intended to illustrate the electronic components provided in the main body device 20 and positional relationships thereof. For this reason, the external appearance of the electronic components, etc. shown in fig. 6 does not always match the external appearance diagrams described above.

The front panel 10 is provided with the primary battery 101 and a power supply circuit (not depicted). In the case of contact power supply, for example, the power supply circuit employs spring-loaded electrode pins (pogo pins) and connectors, etc. Furthermore, in the case of contactless power supply, the power supply circuit employs a loop coil, etc. It should be noted that the standards for contactless power supply include electromagnetic induction systems, such as the Qi standard and the near field communication (= NFC) standard, for example. The primary battery 101 stores power using for example a lithium-ion secondary battery or a capacitor.

The main body device 20 is provided with: a power source unit 201, a sensor unit 202, a notification unit 203, a memory unit 204, a communication unit 205, a control unit 206, a heating unit 207, a heat insulating portion 208, and a holding portion 209. The power source unit 201 is a unit for supplying power to the main body device 20.

The sensor unit 202 is an electronic component for detecting various types of information relating to the main body device 20. The sensor unit 202 has a pressure sensor such as a microphone capacitor, or a flow rate sensor, for example. The sensor unit 202 serving as a sensor outputs detected information to the control unit 206. For example, when a change in air pressure or a flow of air accompanying inhalation has been detected, the sensor unit 202 outputs a numerical value representing inhalation by the user to the control unit 206.

The sensor unit 202 has an input device for receiving user input, for example. The input device is a button or a switch, for example. In this embodiment, the button 20B (see fig. 4) is used as the input device.

The button 20B is used for switching a main power source on and off, and for switching starting and stopping of electrical supply to the heating unit 207 (i.e., starting and stopping of aerosol generation), etc.

The content of user commands is output from the sensor unit 202 to the control unit 206. It should be noted that the button 20B is not only an example of a button but also an example of a switch.

The sensor unit 202 additionally has a temperature sensor for detecting the temperature of the heating unit 207. The temperature sensor detects the temperature of the heating unit 207 on the basis of an electrical resistance value of a conductive track of the heating unit 207, for example. The detected electrical resistance value is output from the sensor unit 202 to the control unit 206. It should be noted that the control unit 206 calculates the temperature of the heating unit 207 on the basis of the electrical resistance value. In other words, the control unit 206 calculates the temperature of the stick-type substrate 210 which is held in the holding portion 209.

The sensor unit 202 additionally has a sensor for detecting whether or not a sub-battery is fitted to the front panel 10 attached to the front face of the main body device 20 (i.e., whether or not a front panel 10 fitted with a sub-battery is attached).

For example, when a predetermined structural feature is detected from the attached front panel 10 via the sensor unit 202, the attached front panel 10 is deemed to be a front panel 10 fitted with a sub-battery. Furthermore, when a current or voltage is detected in the power source line used to supply electricity from the front panel 10, the attached front panel 10 is deemed to be a front panel 10 fitted with a sub-battery.

The sensor unit 202 additionally has a capacitive sensor, an optical sensor or a pressure sensor, etc. for detecting insertion of the stick-type substrate 210 into the holding portion 209, and proximity of objects, etc. through a change in electrostatic capacitance.

The sensor unit 202 furthermore has an optical color sensor for distinguishing individual stick-type substrates 210 by color, a radio-frequency identification (= RFID) reader, or an NFC (near field communication) reader, etc.

The sensor unit 202 furthermore has a biosensor for measuring the user's heart rate, etc., and a fingerprint sensor used for unlocking, etc.

The sensor unit 202 furthermore has an acceleration sensor or a gyro sensor, etc. for detecting movement of the user.

The notification unit 203 is an electronic component for notifying the user of various types of information relating to the main body device 20. The notification unit 203 comprises the LED 20A (see fig. 4) or another light-emitting device. For example, when the power source unit 201 needs to be charged, when the power source unit 201 is in the process of being charged, or when there is an abnormality in the main body device 20, the LED 20A emits light with different patterns for each.

The patterns as referred to here include different colors and different timings for illumination/extinguishing, etc.

Instead of or as well as the abovementioned light-emitting device, the notification unit 203 may also be configured by a display device for displaying images, a sound output device for outputting sounds, or a vibration device for causing the main body device 20 to vibrate, etc. The light-emitting device, display device, sound output device and vibration device, etc. are also examples of notification units for notifying information.

The notification unit 203 may additionally notify the user of a state in which the aerosol can be inhaled. This notification is made when the temperature of the stick-type substrate 210 heated by means of the heating unit 207 has reached a predetermined temperature.

The memory unit 204 is an electronic component for storing various types of information relating to operation of the main body device 20. The memory unit 204 is configured by a non-volatile storage medium such as a flash memory, for example.

Information stored in the memory unit 204 includes an operating system (= OS) and firmware (= FW), and other programs, for example. The memory unit 204 furthermore stores a heating profile used for heating of the stick-type substrate 210 constituting the aerosol source. The heating profile is a data file stipulating temporal changes in a target temperature after the start of heating.

The memory unit 204 stores one heating profile in this embodiment.

It should be noted that the heating profile will be referred to as both a "control profile" and a "control sequence".

The information stored in the memory unit 204 additionally includes information relating to control of electronic components, for example. The information relating to control includes information relating to inhalation by the user, such as number of inhalations, times of inhalation, and cumulative inhalation time. In other words, the memory unit 204 stores a user inhalation behavior history and an operating history.

The communication unit 205 is an electronic component for implementing communication between the main body device 20 and another device. The communication unit 205 is also referred to as a communication interface. The communication unit 205 communicates with other devices by means of a system based on any wired or wireless communication standard. The communication standards referred to here include wireless LAN, wired LAN, Wi-Fi (registered trademark), and Bluetooth (registered trademark), for example.

For example, the communication unit 205 sends the information relating to user inhalation to a smartphone.

Furthermore, the communication unit 205 downloads, from a server, update programs and profiles stipulating changes in temperature of the heating unit 207 in a heating mode.

The control unit 206 is an electronic component which functions as an arithmetic processing device and a control device, and controls operations of the main body device 20 in accordance with various programs.

Control signals are sent through signal lines different from the power source line. For example, communication in the main body device 20 employs a serial communication method such as an inter-integrated circuit (= I2C) communication method, a serial peripheral interface (= SPI) communication method, or a universal asynchronous receiver transmitter (= UART) communication method.

The control unit 206 is realized by means of an electronic circuit such as a central processing unit (= CPU), a microprocessing unit (= MPU), a graphical processing unit (= GPU), an application-specific integrated circuit (= ASIC), a field programmable gate array (= FPGA), or a digital signal processor (= DSP).

The control unit 206 may also include a read only memory (= ROM) for storing programs and computation parameters, etc., and a random access memory (= RAM) for temporarily storing suitably changing parameters, etc.

The control unit 206 executes various types of processing and control through execution of programs.

The processing and control referred to here include, for example: rewriting of heating profiles; supply of electricity from the power source unit 201 to other electronic components; charging of the power source unit 201; detection of information by the sensor unit 202; notification of information by the notification unit 203; storage and reading of information by the memory unit 204; and sending/receiving of information by the communication unit 205.

The control unit 206 additionally controls switching of power sources to electronic components.

Furthermore, the control unit 206 also has a function for judging whether or not the front panel 10 attached to the main body device 20 is a front panel 10 fitted with a sub-battery, etc., and for implementing processing and control correspondingly with a result of the judgment.

The holding portion 209 is a substantially cylindrical container. In this embodiment, a space inside the holding portion 209 defined by an inner wall and a bottom face will be referred to as an internal space 209A. The internal space 209A is substantially columnar.

An opening 209B allowing the internal space 209A to communicate with the exterior is provided in the holding portion 209. The stick-type substrate 210 is inserted into the internal space 209A from the opening 209B. The stick-type substrate 210 is inserted until a tip end thereof touches a bottom portion 209C.

The stick-type substrate 210 is only partially accommodated in the internal space 209A. A state in which the stick-type substrate 210 is accommodated in the internal space 209A will be referred to as the stick-type substrate 210 being held in the internal space 209A.

The inner diameter of at least part of the holding portion 209 in an axial direction thereof is formed so as to be smaller than the outer diameter of the stick-type substrate 210.

An outer circumferential surface of the stick-type substrate 210 inserted into the internal space 209A is therefore subjected to pressure from the inner wall of the holding portion 209. The stick-type substrate 210 is held in the internal space 209A by means of this pressure.

The holding portion 209 also has a function for defining a flow path for air passing through the stick-type substrate 210. An air inflow hole which is an inlet for air into the flow path is disposed in the bottom portion 209C, for example. Moreover, the opening 209B serves as an air outflow hole which is an outlet for the air.

In this embodiment, only part of the stick-type substrate 210 is held in the holding portion 209, with the remainder protruding outside from an enclosure. The part which is held in the holding portion 209 will be referred to below as a substrate portion 210A, and the part protruding from the enclosure will be referred to below as a mouthpiece portion 210B.

The aerosol source is accommodated in at least the substrate portion 210A. The aerosol source is a substance which is atomized by heating so as to generate an aerosol.

Other than shredded tobacco, the aerosol source contains a processed product obtained by molding a tobacco raw material into a granular form, a sheet form or a powder form, or another tobacco-derived substance.

In addition, the aerosol source may also contain a non-tobacco-derived substance produced from a plant other than tobacco, such as mint or herb. The aerosol source may contain a flavoring component such as menthol, for example.

When the main body device 20 is a medical inhaler, the aerosol source may contain a drug to be inhaled by a patient. It should be noted that the aerosol source is not limited to a solid, and may equally be a polyhydric alcohol such as glycerol or propylene glycol, or may be a liquid such as water, for example.

At least part of the mouthpiece portion 210B is held in the user's mouth during inhalation.

When the user inhales with the mouthpiece portion 210B held in the mouth, air flows into the internal space 209A from the air inflow hole. The air which has flowed in reaches the user's mouth after passing through the internal space 209A and the substrate portion 210A. The air reaching the user's mouth contains the aerosol generated by the substrate portion 210A.

The heating unit 207 is an electronic component formed by a heater or other heat-generating element. The heating unit 207 is formed by any material such as a metal or polyimide. The heating unit 207 is constructed in the form of a film, for example, and fitted to the outer circumferential surface of the holding portion 209.

The aerosol source contained in the stick-type substrate 210 is heated and atomized by the heat generated by the heating unit 207. The atomized aerosol source is mixed with air, etc., and an aerosol is generated.

In fig. 6, the outer circumferential region of the stick-type substrate 210 is initially heated, with the range of heating steadily moving toward the center.

Atomization of the aerosol source therefore starts from the outer circumferential region of the stick-type substrate 210 and steadily moves toward the center.

The heating unit 207 generates heat by means of electrical supply from the power source unit 201. Electrical supply to the heating unit 207 is permitted when predetermined user input is detected via the sensor unit 202, for example. The user input as referred to here includes operation of the shutter 30 (see fig. 1) and/or of the button 20B (see fig. 4). However, electricity is supplied to the heating unit 207 on the assumption that the front panel 10 (see fig. 1) is attached to the main body device 20. By attaching the front panel 10, the temperature transmitted to the user's hand can be reduced as compared to when the front panel 10 is not attached.

Moreover, inhalation by the user becomes possible when the temperature of the stick-type substrate 210 heated by means of the heating unit 207 reaches a predetermined temperature. Inhalation of the aerosol by the user is detected by means of the flow rate sensor, etc. in the sensor unit 202 and saved in the memory unit 204.

Electrical supply to the heating unit 207 is stopped when predetermined user input is subsequently detected by the sensor unit 202. It should be noted that it is also possible to adopt a method in which electricity is supplied to the heating unit 207 during a period in which inhalation by the user is detected by the sensor unit 202, and electrical supply to the heating unit 207 is stopped when inhalation by the user is no longer detected by the sensor unit 202.

Furthermore, in the example of fig. 6, the heating unit 207 is disposed outside the stick-type substrate 210, but it is equally possible for the heating unit 207 to be a blade-like metal piece which is inserted into the stick-type substrate 210 for use, or for the heating unit 207 to be a metal piece built into the stick-type substrate 210. When a metal piece acting as the heating unit 207 is built into the stick-type substrate 210, an induction heating coil should be arranged around the holding portion 209. An induction heating coil is an example of an electronic component.

The heat insulating portion 208 is a member for reducing propagation of heat generated by the heating unit 207 to the surrounding area. The heat insulating portion 208 is therefore disposed so as to cover at least the outer circumferential surface of the heating unit 207.

For example, the heat insulating portion 208 is configured by a vacuum insulating material or an aerogel insulating material, etc. A vacuum insulating material is a heat insulating material in which a state of high vacuum is created by wrapping glass wool and silica (silicon powder), etc. in a resin film, for example, so that heat conduction by gas is as close as possible to zero.

<Power Source System Circuit of Main Body Device>

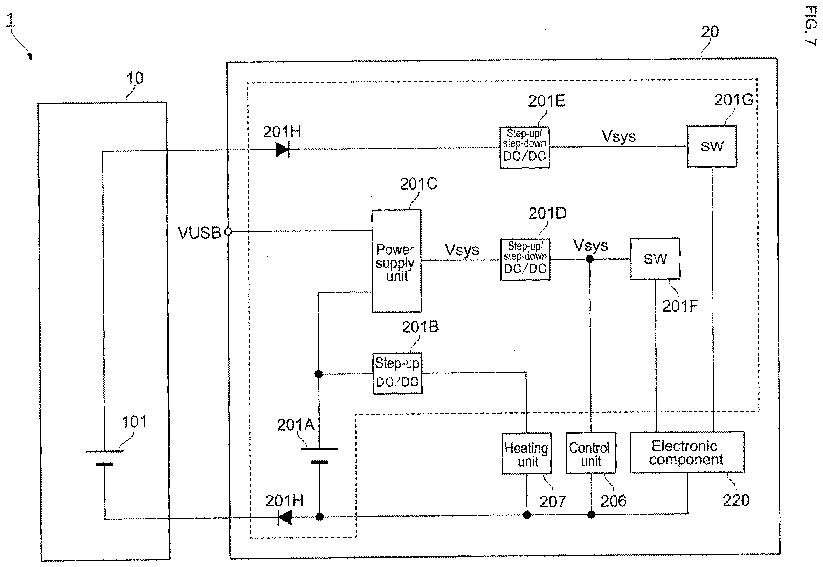

Fig. 7 is a diagram schematically showing connection relationships in a power source system circuit in the aerosol generating device 1 used in embodiment 1. It should be noted that fig. 7 shows a state in which the primary battery 101 is fitted to the main body portion of the front panel 10.

The power source unit 201 shown in fig. 7 is provided with a secondary battery 201A, step-up DC/DC circuit 201B, power supply unit 201C, step-up/step-down DC/DC circuits 201D, 201E, power source switches 201F, 201G, reverse current preventing circuit 201H, and electronic component 220.

A lithium ion secondary battery or capacitor, for example, is used for the secondary battery 201A. The secondary battery 201A is a battery for storing the electrical power required for operation of the main body device 20. The secondary battery 201A is an example of the first battery.

The secondary battery 201A will also be referred to below as the "main battery". The secondary battery 201A is chargeable from an external power source. A mains power source or a mobile battery, for example, is feasible as an external power source in this embodiment.

The step-up DC/DC circuit 201B is a circuit for supplying a constant voltage (e.g., 5 V), regardless of the output voltage of the secondary battery 201A, to a power source line to which the heating unit 207 is connected.

The power supply unit 201C is a circuit which is responsible for distribution of power to the power source line supplying 3.3 V (or namely, the "system power source" ), and for voltage conversion, etc. of power supplied from an external power source (e.g., a mains power source).

When an external power source is not connected, the power supply unit 201C outputs the output voltage of the secondary battery 201A to the step-up/step-down DC/DC circuit 201D. Meanwhile, when an external power source is connected, the power supply unit 201C steps down the external power source to 4.2 V and outputs this voltage to the secondary battery 201A and the step-up/step-down DC/DC circuit 201D. The step-up/step-down DC/DC circuit 201D is configured by a switching regulator, for example.

It should be noted that the power supply unit 201C outputs, for example, a 5 V power source Vcc5 to a power source line (not depicted) to which the LED 20A (see fig. 4) is connected.

The external power source as referred to here includes a mains power source and a mobile battery, and also further includes the primary battery 101 on the front panel 10.

A USB cable is used for supplying electricity from a mains power source or a mobile battery, so a corresponding electrical supply terminal is denoted by VUSB in fig. 7.

The step-up/step-down DC/DC circuit 201D is a circuit for converting the voltage provided from the power supply unit 201C to a 3.3 V system power source Vsys. For example, when the output voltage of the secondary battery 201A is provided from the power supply unit 201C, the step-up/step-down DC/DC circuit 201D generates the 3.3 V system power source Vsys by stepping up or stepping down the output voltage. The output voltage of the secondary battery 201A fluctuates according to residual capacity and extent of deterioration, as is well known, but is converted to 3.3 V by means of the step-up/step-down DC/DC circuit 201D.

Meanwhile, when the output voltage of an external power source is provided from the power supply unit 201C, the step-up/step-down DC/DC circuit 201D generates the 3.3 V system power source Vsys by stepping down the output voltage.

The step-up/down DC/DC circuit 201E is a circuit for converting an output voltage of the primary battery 101 of the front panel 10 to the system power source Vsys of 3.3 V The output voltage of the primary battery 101 also fluctuates according to residual capacity and extent of deterioration, but the step-up/step-down DC/DC circuit 201E steps up or steps down the output voltage to generate the system power source Vsys of 3.3 V. The step-up/step-down DC/DC circuit 201E is also configured by a switching regulator, for example.

The power source switch 201F is a circuit for switching the supply of the system power source Vsys to the electronic component 220 between the supply from the primary battery 101 of the front panel 10 and the supply from the secondary battery 201A of the main body device 20. The control unit 206 commands switching of the power source switch 201F.

When supplying the electronic component 220 with the system power source Vsys derived from the secondary battery 201A of the main body device 20, the power source switch 201F is controlled to be ON. On the other hand, when supplying the electronic component 220 with the system power source Vsys derived from the primary battery 101 of the front panel 10, the power source switch 201F is controlled to be OFF.

In the case of fig. 7, the power source switch 201F is provided on the power source line to which the system power source Vsys derived from the secondary battery 201A of the main body device 20 is applied.

In the case of fig. 7, the electronic component 220 is a generic term for an electronic component used to switch the system power source Vsys among the electronic components built into the main body device 20. For example, the sensor unit 202, the notification unit 203, the memory unit 204, and the communication unit 205 are examples of the electronic component 220.

Incidentally, the control unit 206 is only operated by the system power source Vsys derived from the secondary battery 201A. It is also possible to include the control unit 206 in the electronic component 220.

Furthermore, it is permissible for only a portion of the previously described sensor unit 202, notification unit 203, memory unit 204, and communication unit 205 (for example, the sensor unit 202 and notification unit 203) to be treated as the electronic component 220. That is, the other electronic components may be supplied with only the system source supply Vsys derived from the secondary battery 201A.

It should be noted that the units included in the electronic component 220 in which the power source is switched are not limited to the functional classification (for example, the sensor unit 202, the notification unit 203) shown in fig. 6, but may also be individual component units. For example, a pressure sensor, which is an example of the sensor unit 202, is included in the electronic component 220, but a temperature sensor, which is an example of the sensor unit 202, may be excluded from the electronic component 220.

The LED 20A (see fig. 4) in this embodiment requires a 5 V power supply. For this reason, the electronic component 220 does not include the LED 20A, which is an example of the notification unit 203 (see fig. 4). In the case of an LED operated by the system power source Vsys of 3.3 V, said LED may be included in the electronic component 220.

The power source switch 201G is a circuit for switching the supply of the system power source Vsys to the electronic component 220 between the supply from the primary battery 101 of the front panel 10 and the supply from the secondary battery 201A of the main body device 20. The control unit 206 also commands switching of the power source switch 201G.

In the case of fig. 7, the power source switch 201G is provided on the power source line to which the system power source Vsys derived from the primary battery 101 of the front panel 10 is applied. Due to this, when supplying the electronic component 220 with the system power source Vsys derived from the primary battery 101 of the front panel 10, the power source switch 201G is controlled to be ON. When supplying the electronic component 220 with the system power source Vsys derived from the secondary battery 201A of the main body device 20, the power source switch 201G is controlled to be OFF.

The reverse current preventing circuit 201H is a so-called protection circuit. In the case of fig. 7, the reverse current preventing circuit 201H is a diode and is arranged on a power source line connected to a GND terminal and an external power source terminal.

However, the reverse current preventing circuit 201H may also be a field effect transistor (FET).

### <Processing Operation Example>

An example of processing operations implemented by the control unit 206 (see fig. 6) in the main body device 20 (see fig. 6) will be described below.

### <Attachment Detection Operation>

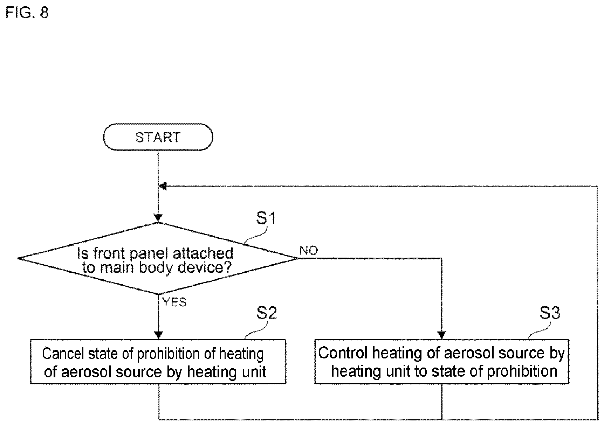

Fig. 8 is a flowchart illustrating an example of an attachment detection operation implemented by the control unit 206 of the main body device 20. This operation is implemented not only before the start of heating by the heating unit 207 (see fig. 6), but also after heating has started, and is constantly implemented in the background. Note that the symbol "S" in the drawings means "step".

The control unit 206 first of all determines whether or not the front panel 10 (see fig. 1) is attached to the main body device 20 (see fig. 1) (step 1).

When the front panel 10 is attached to the main body device 20, an affirmative result is obtained in step 1. On the other hand, when the front panel 10 is removed from the front face of the main body device 20, a negative result is obtained in step 1. Attachment/detachment of the front panel 10 is determined on the basis of an output signal from the Hall IC.

When an affirmative result is obtained in step 1, the control unit 206 cancels the state of prohibition of heating of the aerosol source by the heating unit 207 (step 2).

However, canceling the state of prohibition of heating is different from heating being started. Heating of the stick-type substrate 210 (see fig. 6) constituting the aerosol source is started by a long press of 1 second or greater of the button 20B (see fig. 4) from above the front panel 10.

When a negative result is obtained in step 1, the control unit 206 controls heating of the aerosol source by the heating unit 207 to the state of prohibition (step 3). This makes it possible to prevent heating of the aerosol source while the front panel 10 is not attached.

When step 2 or step 3 is implemented, the control unit 206 repeatedly returns to step 1 to determine whether or not the front panel 10 is attached to the main body device 20.

This attachment detection operation ensures that the user is not directly touching the main body device 20 during a heating operation.

### <Switching of System Power Source>

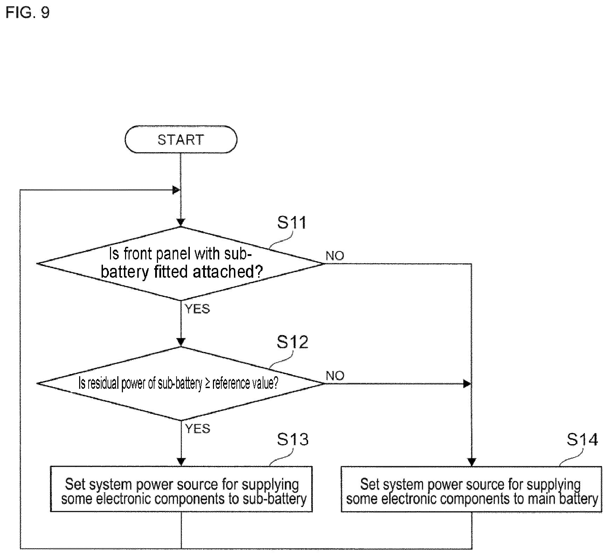

Fig. 9 is a flowchart illustrating processing for switching the system power source Vsys by the control unit 206 (see fig. 6) of embodiment 1.

The processing shown in fig. 9 is launched at a timing at which attachment of the front panel 10 has been detected by means of an output signal from the Hall IC, for example. Moreover, the processing shown in fig. 9 may equally be launched at a timing at which a specific user operation has been received. Specific operations include, for example: opening/closing of the shutter 30 multiple consecutive times (e.g., twice), operation of the button 20B multiple consecutive times (e.g., twice); and a reset operation performed by a long press (e.g., 5 seconds or more) of the button 20B.

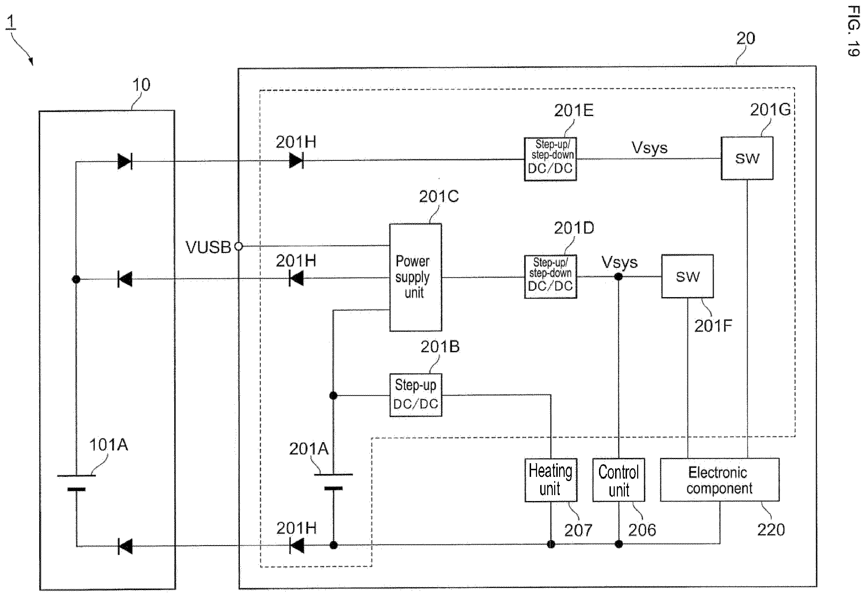

When the processing shown in fig. 9 starts, the control unit 206 determines whether or not a front panel 10 fitted with a sub-battery is attached (step 11). There is no need to identify the type of sub-battery in this embodiment. That is to say, it makes no difference whether the sub-battery is the primary battery 101 or the secondary battery 101A (see fig. 19) which will be described in embodiment 5. Detecting that it is a front panel 10 fitted with a sub-battery may be performed through detection of structural features provided on the rear face of the front panel 10 (the face attached to the surface of the main body device 20), detection of current and voltage appearing in the power source line receiving supply of power from the front panel 10, and detection using information notified from the front panel 10 to the main body device 20, for example,.

An affirmative result is obtained in step 11 when a front panel 10 fitted with a sub-battery is attached. In this case, the control unit 206 determines whether or not the residual power of the sub-battery (primary battery 101) is a reference value or higher (step 12).

The "residual power" here refers to the remaining capacity of the battery. The residual power may be expressed with capacity during non-use (hereinafter also referred to as "initial capacity" ) as 100%, or may be expressed by mAh, for example. In this embodiment, the sub-battery is the primary battery, but if the sub-battery is the secondary battery, the full charge capacity during use may be expressed as 100%.

The reference value is an example of a threshold value defined such that the residual power does not become 0% during the supply of power from the primary battery 101. In this embodiment, the reference value is set to 10% of the initial capacity of the primary battery 101. The initial capacity of the same button-type sub-battery may differ between different manufacturers, and thus a specific value [mAh] may be used.

Note that if there are a plurality of types of maximum capacity of the sub-battery attached to the front panel 10 (e.g., when there is a front panel 10 to which one 1.5 V battery is attached, and a front panel 10 to which two 1.5 V batteries are attached), the control unit 206 detects the capacity of the sub-battery of the attached front panel 10 through the aforementioned structural features or the like.

Additionally, the sensor unit 202 (see fig. 6) of the main body device 20 may be provided with a residual power detection sensor to detect the residual power of the sub-battery attached to the front panel 10. This residual power detection sensor is arranged on the power source line between the step-up/step-down DC/DC circuit 201E and the reverse current preventing circuit 201H, for example. The residual power detection sensor may be provided inside the front panel 10 to notify the control unit 206 of the detected value of the current and voltage and the residual power value.

An affirmative result is obtained in step 12 when the residual power of the sub-battery is the reference value or higher. In this case, the control unit 206 sets the system power source Vsys that supplies some of the electronic components (i.e., the electronic component 220 in fig. 7) to the sub-battery (step 13). That is, the supply source of the system power source Vsys for the electronic component 220 is switched from the main battery to the sub-battery.

After this switching, the power of the main battery (secondary battery 201A) is supplied to electronic components other than the control unit 206, heating unit 207, LED 20A (not shown) (see fig. 4), and electronic component 220. As a result, the power consumption of the main battery can be less than before the switching. The main battery therefore lasts longer than if power were supplied to all electronic components (including the electronic component 220) in the main body device 20 from the main battery. That is, a single charge increases the usable time of the aerosol generating device 1 and also increases the number of inhalable stick-type substrates 210.

In contrast to this, when a negative result is obtained in step 11 or step 12, the control unit 206 proceeds to step 14.

Here, if a negative result is obtained in step 11, the front panel 10, to which a sub-battery is not attached, is attached to the main body device 20.

Furthermore, if a negative result is obtained in step 12, the residual power of the sub-battery of the front panel 10 attached to the main body device 20 is less than the reference value.

The control unit 206, which has moved to step 14, sets the system power supply Vsys that supplies some of the electronic components (i.e., the electronic component 220 of fig. 7) to the main battery (secondary battery 201A) . This ensures that all power consumed by the main body device 20 is provided by the main battery.

Note that after implementing step 13 or 14, the control unit 206 returns to the determination of step 11.

That is, the switching of the system power source Vsys is implemented as follows.

First, if a sub-battery is not attached to the front panel 10, the control unit 206 moves to step 14 to supply power from the main battery to all electronic components in the main body device 20.

On the other hand, if a sub-battery is attached to the front panel 10 and the residual power of the sub-battery is a reference value or higher, the control unit 206 moves to step 13, and switches the supply of power for some of the electronic components (i.e., the electronic component 220 in fig. 7) from the main battery to the sub-battery. It should be noted that when the residual power of the sub-battery is less than the reference value during use, the supply of power for some of the electronic components (i.e., the electronic component 220 in fig. 7) switches from the sub-battery to the main battery.

### <Summary>

The aerosol generating device 1 (main body device 20) in this embodiment is provided with a power source line capable of switching between the system power source Vsys derived from the main battery and the system power source Vsys derived from the sub-battery. The control unit 206 also controls the switching of the system power source Vsys in accordance with the residual power of the sub-battery attached to the front panel 10. This allows the aerosol generating device 1 in this embodiment to achieve a more diverse power supply than if the main battery alone is the power source.

Furthermore, the total amount of power available for the main body device 20, to which the front panel 10 with the sub-battery is attached, is increased more than if the main battery of the main body device 20 is used as the power source.

The time for which the main battery (secondary battery 201A) is usable with one charge, and the number of stick-type substrates 210 that can be used to generate aerosol with one charge can therefore be increased as compared to when power is supplied only by the secondary battery 201A.

### <Embodiment 2>

In this embodiment, a case in which a display is attached to the front panel 10 fitted with the sub-battery is described.

### <Example of External Appearance>

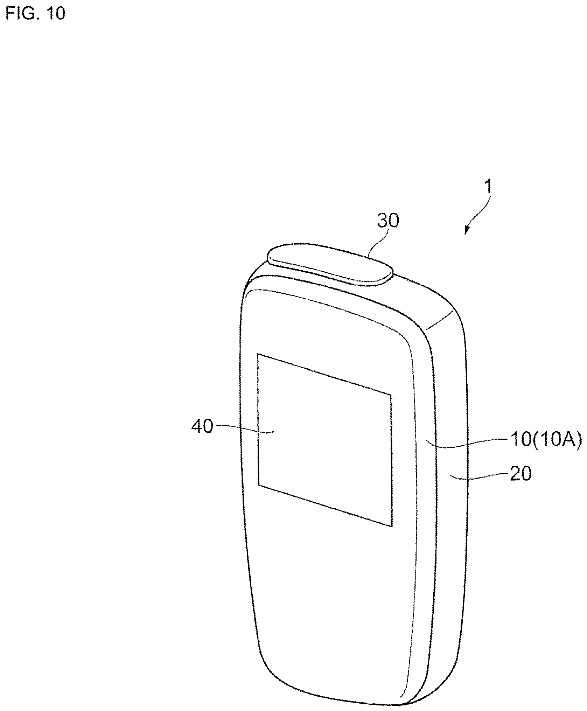

Fig. 10 is a diagram in which a front face side of an aerosol generating device 1 used in embodiment 2 is viewed from diagonally above. Corresponding reference signs are given in fig. 10 for parts which correspond to those of fig. 1.

A display 40 is attached to a main body panel 10A of the front panel 10 shown in fig. 10. The display 40 consists of, for example, a liquid crystal display, an organic EL (=Electro Luminescence) display, or a segmented display consisting of a fixed electrode pattern. The display 40 here is an example of a "first presentation unit" for presenting information.

Liquid crystal displays, OLED displays, and other dot-matrix displays can display any information. On the other hand, in a segmented display, only the display of information defined by the electrode pattern is possible.

The display 40 shown in fig. 10 is substantially square-shaped and is arranged near the center of the front panel 10. Note that the display 40 is not provided with the window 10B (see fig. 1). As a result, when the front panel 10 shown in fig. 10 is attached, the illumination of the LED 20A (see fig. 4) provided on the main body device 20 cannot be confirmed from outside. The LED 20A here is an example of a "second presentation unit".

The front panel 10 envisaged in this embodiment may be provided with both the display 40 and the window 10B.

### <Internal Configuration>

### <Configuration of Functional Unit>

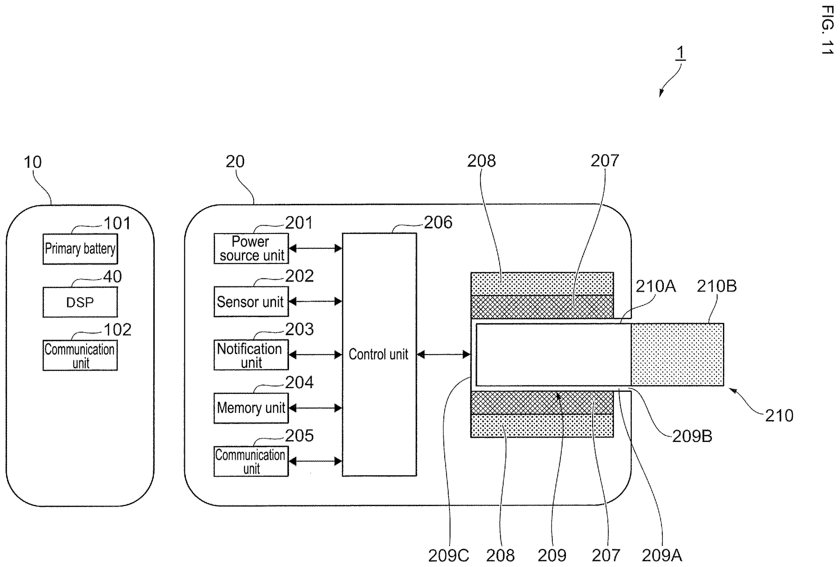

Fig. 11 is a diagram schematically showing the internal configuration of the aerosol generating device 1 used in embodiment 2. Corresponding reference signs are given in fig. 11 for parts which correspond to those of fig. 6.

As shown in fig. 11, the hardware configuration of the main body device 20 is essentially the same as in embodiment 1. On the other hand, the front panel 10 is provided with the display 40 and a communication unit 102 in addition to the primary battery 101. Note that in fig. 11, the display is denoted as "DSP".

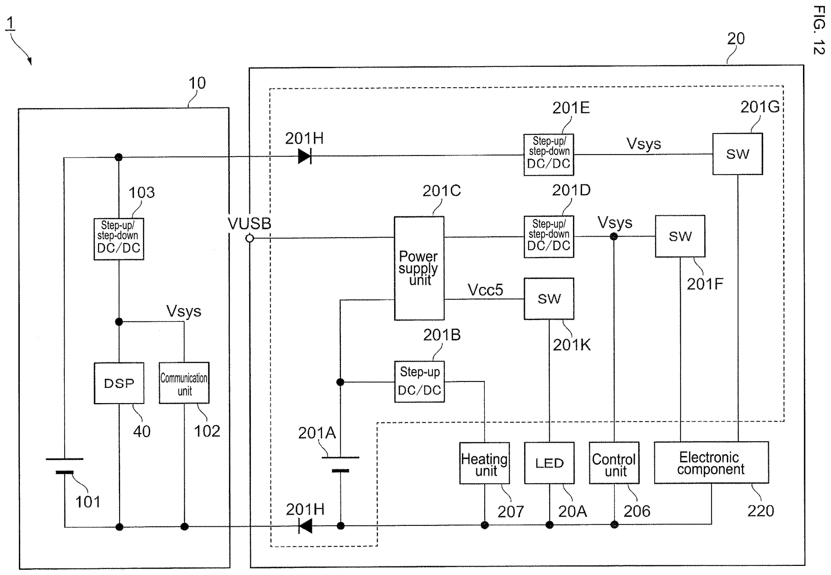

Fig. 12 is a diagram schematically showing connection relationships in a power source system circuit in the aerosol generating device 1 used in embodiment 2. Note that corresponding reference signs are given in fig. 12 for parts which correspond to those of fig. 7.

In the main body device 20 shown in fig. 12, an LED 20A and a power source switch 201K for ON/OFF control of the supply of a 5 V power source Vcc5 to the LED 20A are added. The other configuration of the main body device 120 is the same as in fig. 7.

In the front panel 10 shown in fig. 12, the step-up/step-down DC/DC circuit 103, the display 40, and the communication unit 102 are added. The step-up/step-down DC/DC circuit 103 converts the output voltage of the primary battery 101 into a system power source Vsys and supplies the same to the display 40 and the communication unit 102 through a power source line.

That is, the front panel 10 used in this embodiment supplies, from the primary battery 101, power necessary for operation of the electronic components provided to the front panel 10. In other words, the main battery (secondary battery 201A) of the main body device 20 does not supply power to the electronic components provided to the front panel 10. It is possible to supply the system power source Vsys generated by the main body device 20 to the electronic components of the front panel 10. However, the power consumption of the main battery (secondary battery 201A) would increase.

In addition, the communication unit 102 receives information displayed on the display 40 from the communication unit 205 of the main body device 20. The received information is displayed on the display 40.

### <Switching of Power Supply>

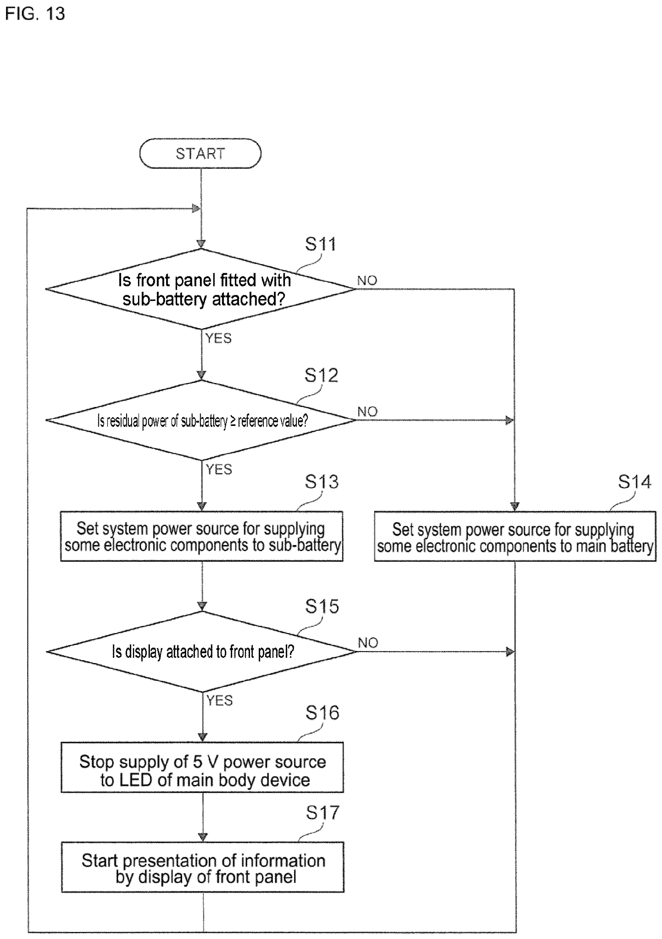

Fig. 13 is a flowchart illustrating processing for switching a power supply by the control unit 206 (see fig. 11) of embodiment 2. Corresponding reference signs are given in fig. 13 for parts which correspond to those of fig. 9.

The processing shown in fig. 13 is also launched at a timing at which attachment of the front panel 10 has been detected by means of an output signal from the Hall IC, for example. Moreover, the processing shown in fig. 13 may equally be launched at a timing at which a specific user operation has been received. Specific operations as referred to here include, for example: opening/closing of the shutter 30 (see fig. 1) multiple consecutive times (e.g., twice); operation of the button 20B (see fig. 4) multiple consecutive times (e.g., twice), and a reset operation performed by a long press (e.g., 5 seconds or more) of the button 20B.

Once the processing shown in fig. 13 starts, the control unit 206 implements the processing of steps 11 to 14, similar to embodiment 1.

In the following, the differences with fig. 9 will be described.

The control unit 206 determines whether or not the display 40 is attached to the front panel 10 after implementing step 13 (i.e., when the specific electronic component 220 is supplied with the system power source Vsys derived from the sub-battery) (step 15). The determination here is about whether or not the display 40 is attached, and is not about whether the LED 20A is hidden by the display 40 as in embodiment 3, which will be described later.

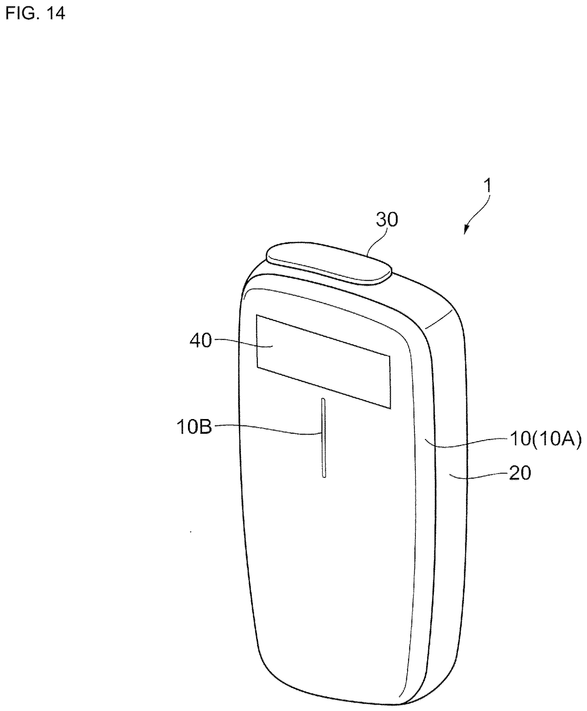

Thus, the control unit 206 in this embodiment does not distinguish between a display 40 of the front panel 10 of the external appearance configuration shown in fig. 10 and the front panel 10 of the external appearance configuration shown in fig. 14, which will be described later.

A negative result is obtained in step 15 when the display 40 is not attached to the front panel 10 fitted with the sub-battery. In this case, the process is the same as in embodiment 1. In this case, the control unit 206 returns to the determination of step 11.

In contrast, an affirmative result is obtained in step 15 when the display 40 is attached to the front panel 10 fitted with the sub-battery. In this case, the control unit 206 stops the supply of the 5 V power source Vcc5 to the LED 20A of the main body device (step 16). Specifically, the power source switch 201K (see fig. 12) is controlled to be in an OFF state. This forcibly turns off the LED 20A.

Subsequently, the control unit 206 starts the presentation of information by the display 40 of the front panel 10 (step 17). For example, the display 40 displays, by characters, symbols, figures, etc., information representing a fault or malfunction of electronic components (not limited to the electronic component 220), an abnormality in main body temperature, the residual power of the main battery, and the residual power of the sub-battery. The display by letters, symbols, figures, etc. is easier for the user to understand than the illumination and flashing of the LED 20A.

After implementing step 17, the control unit 206 returns to the determination of step 11.

### <Summary>

In the aerosol generating device 1 (main body device 20) in this embodiment, when the front panel 10 fitted with the sub-battery is provided with the display 40, the power supply to the LED 20A is stopped and the display of information by the display 40 is started. In other words, the foregoing is integrated into the presentation of information by the display 40. As a result, it is possible to stop the power supply from the main battery (secondary battery 201A) to the LED 20A, which has high power consumption. That is, a supply of power that is based on the presentation form of the information is possible.

Meanwhile, the display of information by the display 40 is more visible than the LED 20A. Furthermore, if the display 40 is a dot matrix display, the amount of information that can be presented is also greater than the LED 20A. As a result, more information can be conveyed to the user in an easy-to-understand manner.

### <Embodiment 3>

This embodiment will describe how the positional relationship between the display 40 (see fig. 10) provided to the front panel 10 and the LED 20A (see fig. 4) is also determined, so as to control the supply of power to the LED 20A.

Note that the basic hardware configuration and functional configuration are therefore the same as in embodiment 2.

Fig. 14 is a diagram in which a front face side of an aerosol generating device 1 used in embodiment 3 is viewed from diagonally above. Corresponding reference signs are given in fig. 14 for parts which correspond to those of fig. 10.

In the case of fig. 14, the front panel 10 is provided with the window 10B and the display 40. This allows the user to observe not only the information displayed on the display 40, but also the illumination state of the LED 20A through the window 10B.

It is also possible for the main body device 20 to also have the front panel 10 of the external appearance configuration shown in fig. 10 attached thereto, rather than only the front panel 10 of the external appearance configuration shown in fig. 14.

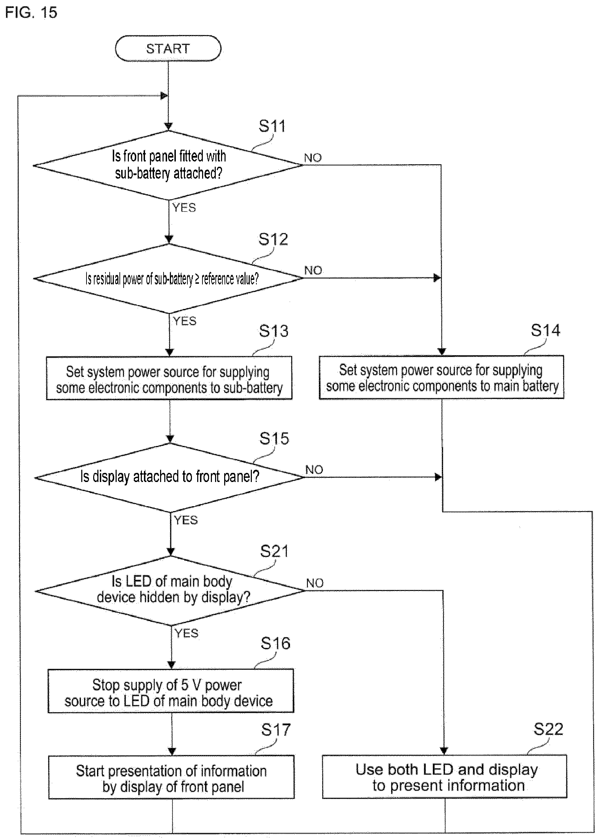

Fig. 15 is a flowchart illustrating processing for switching a power supply by the control unit 206 (see fig. 11) of embodiment 3. Corresponding reference signs are given in fig. 15 for parts which correspond to those of fig. 13.

The processing shown in fig. 15 is also launched at a timing at which attachment of the front panel 10 has been detected by means of an output signal from the Hall IC, for example. Moreover, the processing shown in fig. 15 may equally be launched at a timing at which a specific user operation has been received. Specific operations as referred to here include, for example: opening/closing of the shutter 30 (see fig. 1) multiple consecutive times (e.g., twice); operation of the button 20B (see fig. 4) multiple consecutive times (e.g., twice), and a reset operation performed by a long press (e.g., 5 seconds or more) of the button 20B.

Once the processing shown in fig. 15 starts, the control unit 206 implements the processing of steps 11 to 15, similar to embodiment 2.

In this embodiment, the control unit 206 determines whether the LED 20A of the main body device 20 is hidden by the display 40 between step 15 and step 16 (step 21). Note that the control unit 206 obtains the information necessary for the determination through detection of structural features of the attached front panel 10 or communication with the communication unit 102 of the front panel 10, for example.

For example, the control unit 206 identifies the positional relationship between the display 40 and the LED 20A by the number of protrusions provided on the rear face of the front panel 10. In other words, the control unit identifies the type of the front panel 10.

For example, if the number of protrusions is one, the control unit 206 determines that the LED 20A is hidden by the display 40, and if the number of protrusions is two, the control unit 206 determines that the LED 20A is not hidden by the display 40.

Incidentally, the state in which the LED 20A is hidden by the display 40 is an example of "when presentation of information by LED 20A can no longer be confirmed by a user" .

It should be noted that when the information required for the determination is obtained by communication, the control unit 206 identifies the positional relationship between the display 40 and the LED 20A using a specific flag set to "1" or "0" , or a multi-digit code, for example.

For example, if the specific flag is "1" , the control unit 206 determines that the LED 20A is hidden by the display 40, and if the specific flag is "0" , the control unit 206 determines that the LED 20A is not hidden by the display 40.

It should be noted that the code also includes the manufacturing number or the serial number of the front panel 10, for example.

If the LED 20A of the main body device 20 is hidden by the display 40 of the front panel 10, an affirmative result is obtained in step 21. In this case, the control unit 206 implements step 16 and step 17 in order. That is, the control unit stops the supply of the 5 V power source Vcc5 to the LED 20A and starts the presentation of information by the display 40.

In contrast, if the LED 20A of the main body device 20 is hidden by the display 40 of the front panel 10, a negative result is obtained in step 21. In this case, the control unit 206 presents information using both the LED 20A and the display 40 (step 22).

Incidentally, the information presented through the display 40 and the information presented through the LED 20A may overlap.

For example, both the display 40 and the LED 20A may display the residual power of the battery (the primary battery 101 and/or the secondary battery 201A). The presentation of the residual power by the LED 20A may be performed by the number of illuminated LEDs 20A or the speed of flashing, and the presentation of the residual power by the display 40 may be performed by the number of displayed unit blocks or a numerical value (e.g., 30%).

After implementing step 17 or step 22, the control unit 206 returns to the determination of step 11.

### <Summary>

In the aerosol generating device 1 (main body device 20) in this embodiment, the presentation of information by the display 40 alone and the presentation of information using both the LED 20A and the display 40 can be switched in accordance with the positional relationship between the display 40 provided to the front panel 10 fitted with the sub-battery and the LED 20A provided to the main body device 20.

In other words, a supply of power that is based on the presentation form of the information is possible.

### <Embodiment 4>

In this embodiment, a case of switching the supply source of power to the heating unit 207 between a main battery and a sub-battery will be described.

Note that the basic hardware configuration and functional configuration are therefore the same as in embodiment 2.

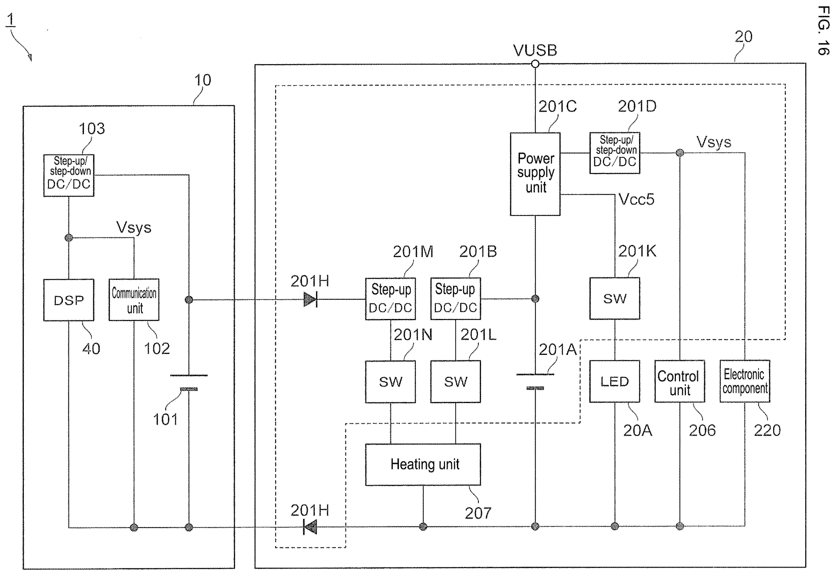

Fig. 16 is a diagram schematically showing connection relationships in a power source system circuit in the aerosol generating device 1 used in embodiment 4. Corresponding reference signs are given in fig. 16 for parts which correspond to those of fig. 12.

In this embodiment, the system power source Vsys of the main body device 20 is derived only from the main battery (secondary battery 201A). The main body device 20 shown in fig. 16 is therefore not provided with a step-up/step-down DC/DC circuit 201E (see fig. 12), or power source switches 201F, 201G (see fig. 12).

On the other hand, as an arrangement specific to this embodiment, the main body device 20 is provided with a step-up DC/DC circuit 201M for boosting the output voltage of the sub-battery (primary battery 101) to a constant voltage (e.g. 5 V) and power source switches 201N, 201L for controlling ON/OFF of the supply of power to the heating unit 207.

Among these, the power source switch 201N is controlled to be ON when power is supplied from the sub-battery, and is controlled to be OFF when power is supplied from the main battery.

Meanwhile, the power source switch 201L is controlled to be ON when power is supplied from the main battery, and is controlled to be OFF when power is supplied from the sub-battery.

It should be noted that, in this embodiment as well, the front panel 10 is provided with the display 40. For this reason, the front panel 10 shown in fig. 16 shows a circuit configuration that is similar to embodiment 3. Equally a front panel 10 which does not have the display 40 as in embodiment 1 may be attached to the main body device 20.

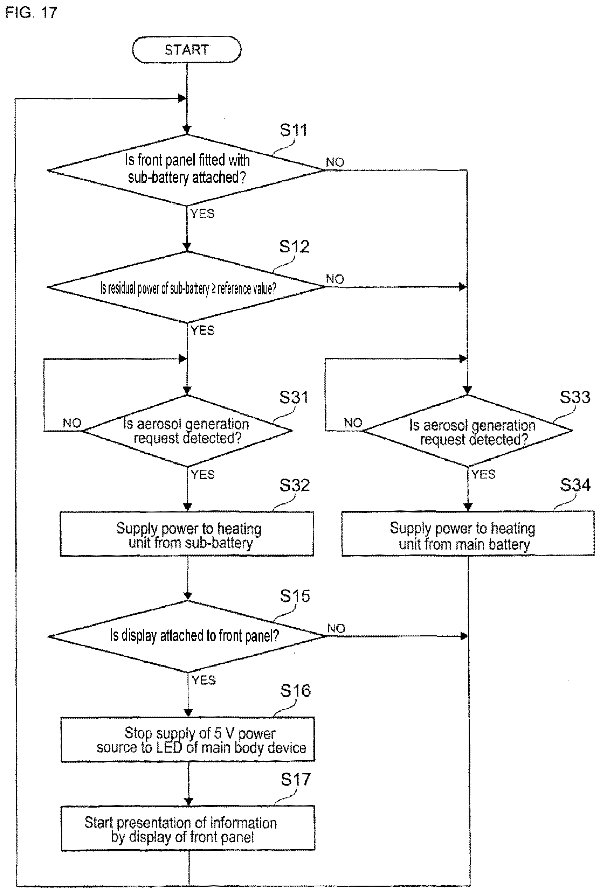

Fig. 17 is a flowchart illustrating processing for switching a power supply implemented by the control unit 206 (see fig. 6) of embodiment 4. Corresponding reference signs are given in fig. 17 for parts which correspond to those of fig. 13.

The processing shown in fig. 17 is also launched at a timing at which attachment of the front panel 10 has been detected by means of an output signal from the Hall IC, for example. Moreover, the processing shown in fig. 17 may equally be launched at a timing at which a specific user operation has been received. Specific operations as referred to here include, for example: opening/closing of the shutter 30 (see fig. 1) multiple consecutive times (e.g., twice); operation of the button 20B (see fig. 4) multiple consecutive times (e.g., twice), and a reset operation performed by a long press (e.g., 5 seconds or more) of the button 20B.

When the processing shown in fig. 17 starts, the control unit 206 determines whether or not a front panel 10 fitted with a sub-battery is attached (step 11).

If a negative result is obtained in step 11, the control unit 206 determines whether or not a generation request for aerosol has been detected (step 33). While a negative result is obtained in step 33, the control unit 206 repeats the determination of step 33. Note that if a negative result is obtained in step 33, the control unit 206 may return to step 11.

If an affirmative result is obtained in step 33, the control unit 206 supplies power from the main battery (secondary battery 201A) to the heating unit 207 (step 34). In this case, the control unit 206 controls the power source switch 201L (see fig. 16) to an ON state (connected state), and controls the power source switch 201N (see fig. 16) to an OFF state (disconnected state).

In contrast to this, when an affirmative result is obtained in step 11, the control unit 206 determines whether the residual power of the sub-battery is a reference value or higher (step 12).

If a negative result is obtained in step 12, the control unit 206 moves to step 33.

On the other hand, if an affirmative result is obtained in step 12, the control unit 206 determines whether or not a generation request for aerosol has been detected (step 31). While a negative result is obtained in step 31, the control unit 206 repeats the determination of step 31. Note that if a negative result is obtained in step 31, the control unit 206 may return to step 11.

If an affirmative result is obtained in step 31, the control unit 206 supplies power from the sub-battery (primary battery 101) to the heating unit 207 (step 32). In this case, the control unit 206 controls the power source switch 201N (see fig. 16) to an ON state (connected state), and controls the power source switch 201L (see fig. 16) to an OFF state (disconnected state).

In the case of fig. 17, when step 32 is performed, the control unit 206 performs step 15.

If a negative result is obtained in step 15 (if the front panel 10 is not provided with the display 40) or if step 34 is implemented, the control unit 206 returns to the determination of step 11.

On the other hand, if an affirmative result is obtained in step 15 (if the front panel 10 is provided with the display 40), the control unit 206 stops the supply of the 5 V power source to the LED 20A of the main body device 20 (step 16), and thereafter starts the presentation of information via the display 40 of the front panel 10 (step 17). Note that, after implementing step 17, the control unit 206 returns to the determination of step 11.

However, the processing shown in steps 15-17 may be arranged prior to the implementation of steps 31-32 or 33-34.

### <Summary>

In the aerosol generating device 1 (main body device 20) in this embodiment, the heating unit 207 is supplied with power from the sub-battery when the residual power of the sub-battery (primary battery 101) provided to the front panel 10 is greater than or equal to the reference value. On the other hand, the heating unit 207 is supplied with power from the main battery when the front panel 10 is not provided with a sub-battery, or when the residual power of the sub-battery provided to the front panel 10 is less than the reference value.

In this manner, power can be supplied from the sub-battery to the heating unit 207, which has a high power consumption, while the residual power in the sub-battery is greater than the reference value. Depletion of the main battery can thus be inhibited.

In the case of this embodiment also, the total amount of power that can be used by the main body device 20 to which the front panel 10 fitted with the sub-battery is attached is greater than when power is supplied only from the secondary battery 201A in the main body device 20.

The time for which the secondary battery 201A is usable with one charge, and the number of stick-type substrates 210 that can be used to generate aerosol with one charge can therefore be increased as compared to when power is supplied only by the secondary battery 201A.

### <Embodiment 5>

This embodiment will describe a case in which the sub-battery fitted to the front panel 10 is a secondary battery.

The basic hardware configuration and functional configuration of this embodiment are therefore the same as in embodiment 1.

However, the connection relationships in the power source system circuit of this embodiment are different from those of embodiment 1.

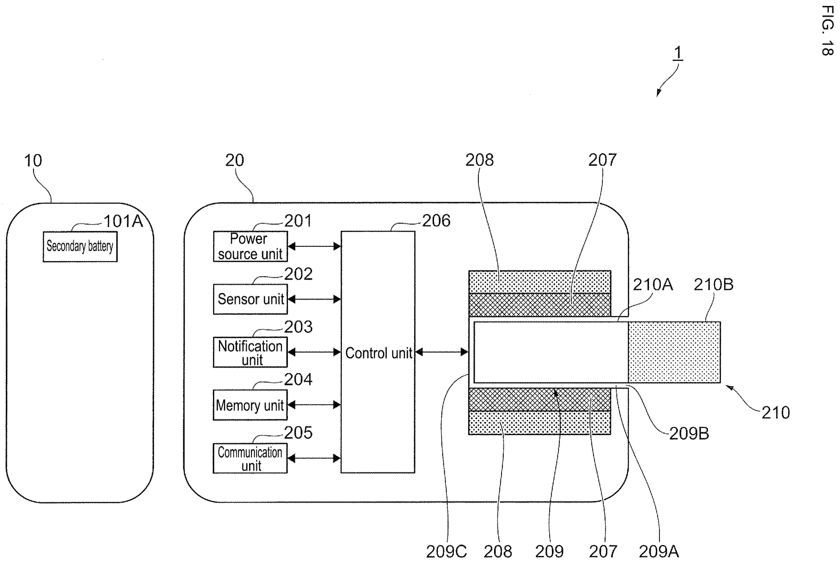

Fig. 18 is a diagram schematically showing the internal configuration of the aerosol generating device 1 used in embodiment 5. Corresponding reference signs are given in fig. 18 for parts which correspond to those of fig. 6.

The difference between fig. 18 and fig. 6 lies in the fact that the sub-battery fitted to the front panel 10 is a secondary battery 101A.

Fig. 19 is a diagram schematically showing connection relationships in a power source system circuit in the aerosol generating device 1 used in embodiment 5. Corresponding reference signs are given in fig. 19 for parts which correspond to those of fig. 7.

In fig. 19, a power source line for charging the secondary battery 101A on the front panel 10 is added to the power source unit 201. Charging of the secondary battery 101A on the front panel 10 is performed by the power supply unit 201C. Other components are the same as in the power source unit 201 illustrated in fig. 7.

The control unit 206 of this embodiment implements the same processing operations as described in embodiment 1.

A description will be given below of a processing operation specific to this embodiment, that is, an operation to charge the secondary battery 101A on the front panel 10.

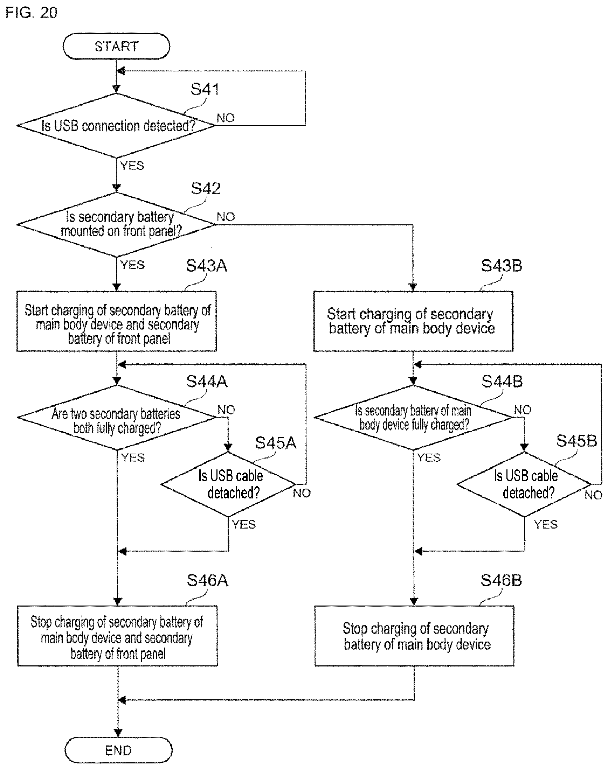

Fig. 20 is a flowchart illustrating an example of a USB charging operation implemented by the control unit 206 of embodiment 5.

The control unit 206 first of all determines whether or not a USB connection has been detected (step 41).

A negative result is obtained in step 41 when a USB connection is not detected. In this case, the control unit 206 repeats the determination of step 41.

Meanwhile, an affirmative result is obtained in step 41 when a USB connection has been detected. In this case, the control unit 206 determines whether or not the secondary battery is mounted on the front panel 10 (step 42).

An affirmative result is obtained in step 42 when the secondary battery is mounted on the front panel 10. In this case, the control unit 206 starts charging of the secondary battery in the main body device 20 and of the secondary battery on the front panel 10 (step 43A). Note that the actual charging may employ a process in which either one of the secondary battery 201A in the main body device 20 and the secondary battery 101A on the front panel 10 is charged to full capacity first, then the other secondary battery is charged to full capacity. Charging of the secondary battery 201A in the main body device 20 and the secondary battery 101A on the front panel 10 may equally be performed in parallel.

The control unit 206 then determines whether or not both of the two secondary batteries are fully charged (step 44A).

A negative result is obtained in step 44A if either of the two secondary batteries is not fully charged. Meanwhile, an affirmative result is obtained in step 44A when both of the two secondary batteries are fully charged.

If a negative result is obtained in step 44A, the control unit 206 determines whether or not the USB cable has been detached (step 45A).

A negative result is obtained in step 45A if the USB cable is still attached. In this case, the control unit 206 returns to step 44A.

Meanwhile, an affirmative result is obtained in step 45A if the USB cable has become detached during charging.

If an affirmative result is obtained in step 44A or if an affirmative result is obtained in step 45A, the control unit 206 stops charging of the secondary battery in the main body device 20 and of the secondary battery on the front panel 10 (step 46A). After this, the control unit 206 terminates the USB charging operation.

The description will return to the determination in step 42.

A negative result is obtained in step 42 when the secondary battery 101A is not mounted on the front panel 10 (including not only a case in which the sub-battery is not mounted, but also a case in which the sub-battery which is mounted is the primary battery 101). In this case, the control unit 206 starts charging of the secondary battery 201A in the main body device 20 (step 43B).

The control unit 206 then determines whether or not the secondary battery 201A in the main body device 20 is fully charged (step 44B).

A negative result is obtained in step 44B if the secondary battery 201A is not fully charged. Meanwhile, an affirmative result is obtained in step 44B if the secondary battery 201A is fully charged.

If a negative result is obtained in step 44B, the control unit 206 determines whether or not the USB cable has been detached (step 45B).

A negative result is obtained in step 45B if the USB cable is still attached. In this case, the control unit 206 returns to step 44B. Meanwhile, an affirmative result is obtained in step 45B if the USB cable has become detached during charging.

If an affirmative result is obtained in step 44B or if an affirmative result is obtained in step 45B, the control unit 206 stops charging of the secondary battery in the main body device 20 (step 46B).

After this, the control unit 206 terminates the USB charging operation.

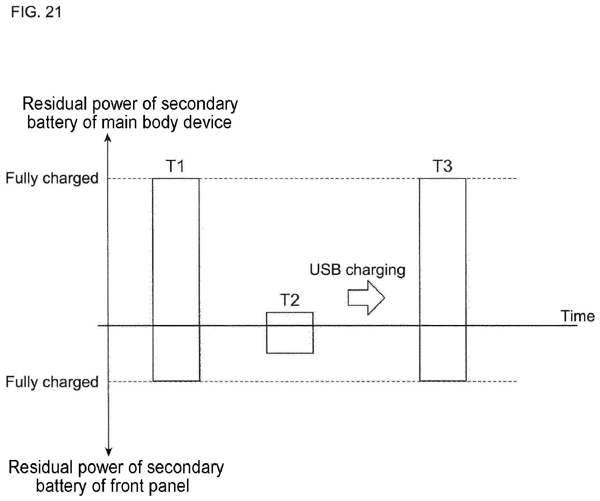

Fig. 21 is a diagram illustrating the USB charging operation.

The horizontal axis in the drawing denotes time, the top half of the vertical axis denotes residual power in the secondary battery 201A in the main body device 20, and the bottom half of the vertical axis denotes residual power in the secondary battery 101A in the front panel 10.

In fig. 21, the secondary battery 101A on the front panel 10 and the secondary battery 201A in the main body device 20 are both fully charged in an initial state T1.

At a time point T2, the residual power in the secondary battery 101A on the front panel 10 and the secondary battery 201A in the main body device 20 has fallen below full charge in both cases. USB charging is started when the USB cable is connected in this state.

At T3 at the end of USB charging, the secondary battery 101A on the front panel 10 and the secondary battery 201A in the main body device 20 both return to fully charged.

### <Summary>

The front panel 10 fitted with the secondary battery 101A described in this embodiment is applicable to all of embodiments 1-4 described above.

Furthermore, if the secondary battery 101A is fitted to the front panel 10 as described in this embodiment, the secondary battery 101A on the front panel 10 is also charged together during charging of the secondary battery 201A in the main body device 20.

### <Embodiment 6>

In this embodiment, other configuration examples of embodiment 4 are described.

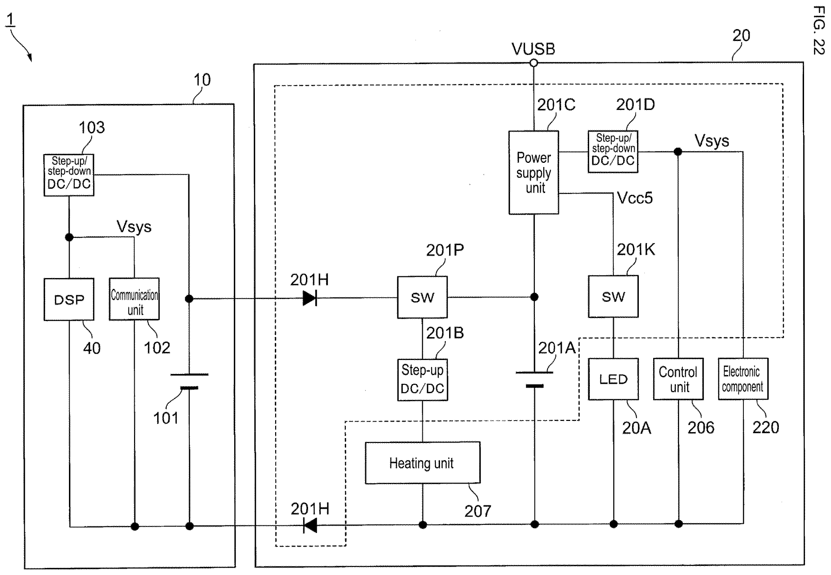

Fig. 22 is a diagram schematically showing connection relationships in a power source system circuit in the aerosol generating device 1 used in embodiment 6. Corresponding reference signs are given in fig. 22 for parts which correspond to those of fig. 16.

The aerosol generating device 1 shown in fig. 22 and the aerosol generating device 1 shown in fig. 16 differ in that the supply of power to the heating unit 207 is switched by one step-up DC/DC circuit 201B and one power switch 201P.

In fig. 22, one of the two input terminals of the power switch 201P is connected through a power source line with the primary battery 101 (or secondary battery 101A) of the front panel 10 and the other through a power source line with the secondary battery 201A of the main body device 20. This switching of the switch of the power source switch 201P switches the power source connected to the step-up DC/DC circuit 201B.

Adopting the circuit configuration shown in fig. 22 allows a reduction in the number of components compared to embodiment 4.

### <Other Embodiments>

(1) Embodiments of the present disclosure were described above, but the technical scope of the present disclosure is not limited to the scope disclosed in the embodiments above. It will be obvious from the disclosure of the claims that the technical scope of the present disclosure also includes various modifications or improvements made to the embodiments above.
(2) The embodiments above described a case in which the junction between the front panel 10 and the main body device 20 forms a continuous and stepless joint with an integral external appearance, but the junction may also include a step or cutout, etc., provided that there is an integral external appearance with the main body device 20.
(3) The embodiments above described a case in which the aerosol source is a solid, but the aerosol source may equally be a liquid. When the aerosol source is a liquid, a system is adopted in which the aerosol source is guided to a narrow tube known as a wick by using a capillary phenomenon, and a coil wound around the wick is heated to thereby vaporize the aerosol source.
(4) The embodiments above described an aerosol generating device which generates an aerosol by heating a solid aerosol source, but the aerosol generating device may equally generate an aerosol by separately heating each of a solid aerosol source and a liquid aerosol source. An aerosol generating device of this type is also referred to as a hybrid aerosol generating device.
(5) The embodiments above described the aerosol generating device 1 (main body device 20) to which the front panel 10 is attached as an example of an electronic device, but the electronic device may equally be an electronic device which is usable in a state in which a cover member (including a main body cover or a protective cover) or a panel member is attached, the cover member or panel member being detachable from the device main body, and examples of such electronic devices include a remote control, a gaming device, a music player, a video camera, a digital camera, an electronic dictionary, and an electronic calculator.
(6) In embodiment 5 described above, a case was described in which the sub-battery of the front panel 10 is changed to the secondary battery 101A, but the sub-battery of the front panel 10 in embodiments 2 to 4 may be changed to the secondary battery 101A. The processing operations described in embodiment 5 are also used in embodiments 2 to 4 when the attachment of the secondary battery 101A to the sub-battery of the front panel 10 in these embodiments is envisaged.
(7) The embodiments above described an example in which aerosol generation is permitted when the front panel 10 is attached to the main body device 20, but aerosol generation by the main body device 20 may also be possible while the front panel 10 is not attached.
   In this case, attachment of the front panel 10 to the main body device 20 is used to broaden the functions that may be implemented by the main body device 20. For example, the main body device 20 with the front panel 10 removed operates using only the built-in secondary battery 201A (see fig. 7), and the main body device 20 to which the front panel 10 fitted with the secondary battery is attached enables a function of using power from the battery on the front panel 10 (primary battery 101, secondary battery 101A).
(8) The embodiments above described an example in which the button 20B provided on the main body device 20 is operated by pressing the front panel 10 fitted to the main body device 20 to cause deformation, but input of instructions to the main body device 20 may also employ a method other than deformation of the front panel 10.

For example, a touch panel may be provided to the front panel 10, and information indicating a user operation on the touch panel may be notified to the control unit 206 (see fig. 6) in the main body device 20 through a communication unit which is not depicted.

Furthermore, a switch or button may be arranged on the front panel 10, and the presence or absence, etc. of an operation thereon may be notified to the control unit 206 (see fig. 6) in the main body device 20. The touch panel and switch, etc. as referred to here are examples of an operating unit.

Moreover, a heat shielding structure is used on surface members and inside a main body device 20 of this type.

### <Summary>

It should be noted that the present disclosure comprises the following configurations.
(1) An electronic device having a control unit and a first battery, wherein, when a second battery is provided to a cover member attached to a device main body, and a residual power of the second battery is a pre-determined reference value or higher, the control unit switches a supply of power some electronic components provided to the device main body from the first battery to the second battery.
(2) The electronic device according to (1), wherein the control unit switches, from the first battery to the second battery, a power supply for some of the electronic components operated by the same system power source as the control unit.
(3) The aerosol generating device according to (1) or (2), wherein, when a first presentation unit for presenting information is provided to the cover member, the control unit stops a supply of power to a second presentation unit provided on the device main body.
(4) The electronic device according to (1) or (2), wherein, when a first presentation unit for presenting information is provided to the cover member, the control unit stops a supply of power to a second presentation unit provided on the device main body when presentation of information by the second presentation unit can no longer be confirmed by a user due to the attachment of the cover member.
(5) The electronic device according to (4), wherein the control unit switches presentation of information by the second presentation unit to presentation of information by the first presentation unit.
(6) The electronic device according to any one of (1)-(5), wherein the second battery is charged by a power supply from the device main body.
(7) The electronic device according to any one of (1)-(6), wherein some electronic components is a heating unit for heating an aerosol source.
(8) The electronic device according to any one of (1)-(7), wherein the attachment of the cover member to the device main body is one of conditions to enable heating of the aerosol source by the heating unit.
(9) The electronic device according to any one of (1)-(8), wherein the cover member allows operation of a switch on the device main body by pressing by a user in a state in which the cover member is attached to the device main body.
(10) The electronic device according to any one of (1)-(8), wherein the control unit receives, from the cover member, information about operation of an operating unit provided to the cover member.
(11) The electronic device according to any one of (1)-(10), wherein the cover member attached to the device main body forms an integral external appearance with a portion of the device main body that is not covered.
(12) A program for causing a computer provided in an electronic device having a first battery to realize a function for, when a second battery is provided to a cover member attached to a device main body, switching a supply of power for some of the electronic components provided to the device main body from the first battery to the second battery.

### [Reference Signs List]

1 ... aerosol generating device, 10 ... front panel, 10A ... main body panel, 10B ... window, 10C, 20C ... magnet, 20 ... main body device, 20A ... LED, 20B ... button, 21 ... USB connector, 22 ... hole, 30 ... shutter, 40 ... display, 101 ... primary battery, 101A ... secondary battery, 102 ... communication unit, 201A ... secondary battery, 201 ... power source unit, 201B, 201M ... step-up DC/DC circuit, 201C ... power supply unit, 201D, 201E ... step-up/step-down DC/DC circuit, 201F, 201G, 201K, 201L, 201N ... power source switch, 201H ... reverse current preventing circuit, 202 ... sensor unit, 203 ... notification unit, 204 ... memory unit, 205 ... communication unit, 206 ... control unit, 207 ... heating unit, 208 ... heat insulating portion, 209 ... holding portion, 210 ... stick-type substrate

## Claims

1. An electronic device having a control unit and a first battery,
wherein, when a second battery is provided to a cover member attached to a device main body, and a residual power of the second battery is a pre-determined reference value or higher, the control unit switches a supply of power for some electronic components provided to the device main body from the first battery to the second battery.

2. The electronic device as claimed in claim 1, wherein the control unit switches, from the first battery to the second battery, a power supply for some of the electronic components operated by the same system power source as the control unit.

3. The electronic device as claimed in claim 1 or 2, wherein, when a first presentation unit for presenting information is provided to the cover member,
the control unit
stops a supply of power to a second presentation unit provided on the device main body.

4. The electronic device as claimed in claim 1 or 2, wherein, when a first presentation unit for presenting information is provided to the cover member,
the control unit
stops a supply of power to a second presentation unit provided on the device main body when presentation of information by the second presentation unit can no longer be confirmed by a user due to the attachment of the cover member

5. The electronic device as claimed in claim 3 or 4, wherein the control unit
switches presentation of information by the second presentation unit to presentation of information by the first presentation unit.

6. The electronic device as claimed in any one of claims 1-5, wherein the second battery is charged by a power supply from the device main body.

7. The electronic device as claimed in any one of claims 1-6, wherein a portion of the electronic components is a heating unit for heating an aerosol source.

8. The electronic device as claimed in claim 7, wherein the attachment of the cover member to the device main body is one of conditions to enable heating of the aerosol source by the heating unit.

9. The electronic device as claimed in any one of claims 1-8, wherein the cover member allows operation of a switch on the device main body by pressing by a user in a state in which the cover member is attached to the device main body.

10. The electronic device as claimed in any one of claims 1-8, wherein the control unit
receives, from the cover member, information about operation of an operating unit provided to the cover member.

11. The electronic device as claimed in any one of claims 1-10, wherein the cover member attached to the device main body forms an integral external appearance with a portion of the device main body that is not covered.

12. A program for causing a computer provided in an electronic device having a first battery to realize
a function for, when a second battery is provided to a cover member attached to a device main body, switching a supply of power for some electronic components provided to the device main body from the first battery to the second battery.
